# EUROPÄISCHE PATENTANMELDUNG

(11) **EP 1 632 421 A2**
(43) Veröffentlichungstag der Anmeldung: **08.03.2006**
(21) Anmeldenummer: 05107483.9
(22) Anmeldetag: 15.08.2005
(51) Int. Cl.: B62D 5/22, B62D 15/02

(54) **Lenksystem**

(30) Priorität: 01.09.2004 DE 102004042243
(71) Anmelder: ZF-Lenksysteme GmbH, 73527 Schwäbisch Gmünd (DE)
(72) Erfinder: Abele, Wolfgang, 73565, Spraitbach (DE); Heilig, Arnulf, 73529, Schwäbisch Gmünd (DE)

(57) **Zusammenfassung**

Die Erfindung betrifft ein Lenksystem (1) für ein Fahrzeug, insbesondere eine Servolenkung für ein Kraftfahrzeug, mit einem, eine Rotationsbewegung eines ersten Getriebeelements (2), wie einem Ritzel (31), in eine axiale Verschiebebewegung einer Stange (3) oder Zahnstange (25) umformenden Getriebe (4). Das Getriebe (4) dient zur Lenkwinkelverstellung ein oder mehrerer Räder des Kraftfahrzeugs. Die Verschiebebewegung der Stange (3) erfolgt zwischen einem ersten Anschlag (5) und einem zweiten Anschlag (6) und wird von einem Positionssensor (7) erfasst.

Zur sicheren Erfassung und Bestimmung der Position der Stange (3) und des Lenkwinkels bei gleichzeitiger Möglichkeit eine gesteuerte Hubbegrenzung der Stange (3) darzustellen, ist vorgesehen, an der Stange (3) oder einem mit ihr verschiebbaren Bauteil des Lenksystems (1) in der Nähe ihres ersten Anschlages (5) eine erste Referenzinformation (9) oder ein Paar Referenzmarken (21,21') mit definiertem Abstand (a) zueinander und in der Nähe ihres zweiten Anschlages (6) eine zweite Referenzinformation (10) oder ein zweites Paar Referenzmarken (22,22') mit einem definierten Abstand (b) zur Erfassung durch den Positionssensor (7) anzuordnen und die Signale (Iₛ) des Positionssensors (7) mit den Signalen (I_{d}) eines Drehwinkelsensors (11) für das erste Getriebeelement (2) oder für einen Servomotor des Lenksystems (1) zu verknüpfen.

## Beschreibung

Die Erfindung betrifft ein Lenksystem für ein Fahrzeug, insbesondere eine Servolenkung für ein Kraftfahrzeug, nach dem Oberbegriff des Anspruchs 1.

Zur Erfassung einer Position einer axialverschiebbaren Stange, Zahnstange, Lenkspindel oder Kolbenstange in Lenksystemen von Fahrzeugen sind vielfältige Lösungen bekannt. Die Erfassung der Position der Stange dient zur Bestimmung eines Drehwinkels einer Lenkhandhabe des Lenksystems und zur gesteuerten Begrenzung des Hubes der Stange.

Aus der EP 0410583 B1 ist eine Vorrichtung zur Erfassung der Position einer Zahnstange in einem Lenkgetriebe als Maß für den Lenkwinkel bekannt, bei der Oberflächeneigenschaften der Zahnstange über einen magnetoresistiven Sensor als Maß für die Zahnstangenposition erfasst werden. Alternativ dazu wird die Position eines mit der Zahnstange axial verschiebbaren Gleitstabes und dessen sich verjüngenden ferromagnetischen Flächen mit Hilfe des magnetoresistiven Sensors erfasst. Die Signale des magnetoresistiven Sensors werden über eine Verstärkerschaltung zur Anzeige gebracht.

Aus der DE 102 22 761 A1 ist eine Zahnstangenlenkung mit Stellungserfassung der Zahnstange insbesondere einer steer-by-wire Lenkung bekannt, die bevorzugt über Linear-Sensoren die Position der Zahnstange erfasst und gleichzeitig Mittel zur Hubbegrenzung der Zahnstange im Sinne einer elektronischen, gesteuerten Anschlagsbegrenzung der Zahnstange aufweist.

Die DE 197 54 278 A1 beschreibt ein Lenksystem für ein Fahrzeug, insbesondere eine Servolenkung für ein Kraftfahrzeug, mit einem Lenkgetriebe, das eine Rotationsbewegung eines ersten, als Ritzel ausgebildeten Getriebeelements, in eine axiale Verschiebebewegung einer als Zahnstange ausgebildeten Stange, umformt. Die Zahnstange ist mit einer Kolbenstange eines hydraulischen Servozylinders in Reihe geschaltet. Die Zahnstange und die Kolbenstange sind zwischen einem ersten und einem zweiten axialen Anschlag verschiebbar. Mindestens ein Positionssensor, vorzugsweise zwei mit Abstand an dem Servozylinder angeordnete Positionssensoren erfassen den Ort des Kolbens und damit den Verschiebeweg und die Verschiebeposition der Zahnstange. Eine Steuereinheit mit einem elektrischen Steuerventil dämpft und verzögert die Verschiebebewegung des Kolbens, wenn dieser sich einem axialen Anschlag nähert und/oder verringert die Förderleistung einer Hydraulikpumpe des Lenksystems.

Die bekannten Lenksysteme mit Erfassung der Verschiebebewegung und -position einer Stange zur Lenkwinkelverstellung eines Rades sind entweder Speziallösungen oder setzen aufwändige Sensoren, wie Linearsensoren ein, oder sind bei der Anwendung ausschließlich periodischer Winkelsensoren nicht sicher in der Erfassung der absoluten Position der Stange und damit in der Bestimmung eines Lenkwinkels einer Lenkhandhabe des Lenksystems.

Der Erfindung liegt die Aufgabe zugrunde, ein Lenksystem anzugeben, das eine einfache, sichere Erfassung und Bestimmung eines Lenkwinkels und eine gesteuerte Hubbegrenzung einer Stange zur Lenkwinkelverstellung eines Rades bei geringer Energieaufnahme ermöglicht.

Die Aufgabe wird mit einem Lenksystem mit den Merkmalen des Anspruchs 1 gelöst.

Zur sicheren Bestimmung des Lenkwinkels in Richtung und Größe und zur gesteuerten Hubbegrenzung der Stange ist vorgesehen, an der Stange oder an einem mit der Stange in gleicher Richtung verschiebbaren Bauteil des Lenksystems eine erste Referenzinformation und eine zweite Referenzinformation jeweils in der Nähe des ersten Anschlages und des zweiten, dem ersten Anschlag gegenüberliegenden Anschlag anzuordnen. Als Referenzinformationen werden die an dem jeweiligen Ort der Stange, diese verändernde Eigenschaftsmerkmale, optischer, mechanischer, magnetischer oder sonstiger Art bezeichnet. Durch eine Steuer- und/oder Regelungseinrichtung werden die durch die Referenzinformationen generierten Signale des Positionssensors mit periodischen Signalen eines vorzugsweise hochauflösenden Drehwinkelsensors, der die Rotation des ersten Getriebeelementes oder die Rotation einer Welle eines Servomotors des Lenksystems mißt, verknüpft, sodaß bei einem Überstreichen des relativ zu der Stange feststehenden Positionssensors durch die Referenzinformationen die jeweilige Position der Stange sicher erfasst ist. Eine sichere Erfassung der Position der Stange und eine absolute Kalibrierung des Drehwinkelsensors ist damit gegeben.

Bevorzugte Ausführungen ergeben sich aus den Unteransprüchen.

Die in die Stange eingeprägten Referenzinformationen können aus je einer Kerbe in der Nähe der Anschläge der Stange und insbesondere aus den Flanken der Kerben gebildet sein. Dabei können die Flanken der Kerben mit unterschiedlichem Abstand zueinander ausgebildet sein.

Es kann auch zweckmäßig sein, die Flanken beider Kerben mit gleichem Abstand zueinander auszubilden, wobei dann zur Erfassung der Verschiebeposition der Stange von der Mitte zwischen den Kerben jeweils eine dritte Referenzinformation, vorgesehen ist, die wiederum aus Flanken einer Kerbe oder aus Eigenschaftsmerkmalen der Stange, wie einer oder zwei axialen Nuten, oder Spuren, die ein gleichförmiges, voneinander verschiedenes Signal des Positionssensors erzeugen und sich zu der ersten und zweiten Referenzinformation hin erstrecken, gebildet sein kann.

Die dritte oder vierte Referenzinformation kann eine in axialer Richtung in die Stange eingelassene Nut konstanter Tiefe sein. Es kann auch zweckmäßig sein, die dritte und vierte Referenzinformation jeweils aus einer axialen Nut zu bilden, wobei die Nuten in tangentialer Richtung der Stange versetzt zueinander angeordnet sind und jeder Nut ein Messelement des Positionssensors zur Detektion der jeweiligen Nut zugeordnet ist. Auf diese Weise lässt sich auf der Stange ein Binärcode verwirklichen.

Die erste, die zweite und die dritte Referenzinformation lässt sich auch aus einem ersten Paar Referenzmarken mit definiertem Abstand, einem zweiten Paar Referenzmarken mit definiertem, anderem Abstand und einem dritten Paar Referenzmarken mit anderem, definierten Abstand bilden.

Um die Signale des Positionssensors für eine vorzugsweise elektronisch gesteuerte Hubbegrenzung der Stange heranzuziehen, ist die erste und zweite Referenzinformation oder das erste und zweite Paar Referenzmarken mit gleichem Abstand zu den Anschlägen auf der Stange oder dem mit ihr in gleicher Richtung verschiebbaren Bauteil angeordnet. Die auf diese Weise gewonnene absolute Lenkwinkelinformation kann zur Dämpfung des mechanischen Anschlages und für einen aktiven Rücklauf der Stange angewandt werden. Zur schnelleren Erfassung des absoluten Lenkwinkels ist es zweckmäßig, mittig zwischen dem ersten Anschlag und dem zweiten Anschlag eine weitere Referenzinformation auf der Stange oder dem Bauteil anzuordnen. Die Steuer- und/oder Regelungseinrichtung induziert nach dem Überstreichen des Positionssensors durch jeweils eine Referenzinformation oder ein Paar Referenzmarken eine Dämpfung und/oder eine Hubbegrenzung der Stange über die Ansteuerung des die Stange verschiebenden Servomotors. Die Position der Referenzinformationen oder Referenzmarken auf der Stange oder auf dem mit ihr verschiebbaren Bauteil werden in einem Speicher der Steuer- und/oder Regelungseinrichtung oder des Lenksystems abgespeichert. Ebenso die zu dem jeweiligen Messwert gehörende Drehwinkelinformation. Durch den definierten Abstand der ersten und zweiten Referenzinformationen oder Referenzmarken von dem jeweils dazugehörigen mechanischen Anschlag der Stange ist eine komfortable Bedienung des Lenksystems ermöglicht.

Um bei der Inbetriebnahme des Lenksystems eine Fehlkalibrierung zu vermeiden indem die Position des Positionssensors etwa zwischen dem jeweiligen mechanischen Anschlag und der diesem jeweils benachbarten, äußeren Referenzmarke oder des ersten oder zweiten Referenzmarkenpaares oder der ersten und zweiten Referenzinformation sich befindet, ist vorgesehen, das Lenksystem so zu bilden, dass zumindest eine Komponente des Lenksystems eine Rückstellkraft auf die Stange bewirkt, wodurch die Stange relativ zu dem Positionssensor zwischen dem ersten und zweiten Referenzmarkenpaar oder zwischen der ersten und zweiten Referenzinformation zu liegen kommt. Durch diese konstruktive Maßnahme ist eine definierte Startposition der Stange und ihrer Referenzmarkenpaare oder Referenzinformationen relativ zu dem Positionssensor gewährleistet.

Die Stange ist bevorzugt eine Zahnstange einer Zahnstangen-Hilfskraft- oder Fremdkraftlenkung eines Kraftfahrzeuges. Die Stange kann gleichwohl als Teil einer Kugelmutter-Umlauflenkung, eines Lenkaktuators einer elektrischen oder elektrohydraulischen Lenkung oder eine Spurstange einer Fremd- oder Hilfskraftlenkung sein. Die Stange oder das mit ihr verschiebbare Bauteil des Lenksystems kann auch eine Kolbenstange eines hydraulischen Servomotors sein. Die Referenzmarken oder Referenzinformationen können durch Gestaltsmerkmale der Stange, wie etwa durch Bohrungen oder Senken gebildet sein. Es kann in Abhängigkeit von der gewählten Bauform des Positionssensors (magnetoresistiv, Hall-, optischer Sensor usw.) auch zweckmäßig sein, die eingeprägten Referenzinformationen durch magnetische oder optische Kodierungen zu bilden.

Zur schnelleren Erfassung des absoluten Lenkwinkels mit Hilfe von Referenzmarken oder Referenzinformationen an der Stange kann es zweckmäßig sein, mehr als drei Paare Referenzmarken oder drei Referenzinformationen an der Stange oder an dem mit ihr verschiebbaren Bauteil des Lenksystems anzuordnen. Die ReferenzmarkenPaare oder Referenzinformationen lassen sich beispielsweise mit einem Abstand zueinander anordnen, der einem Drehwinkel von jeweils etwa 90° an der Lenkhandhabe des Lenksystems entspricht.

Bevorzugt ist der Positionssensor in der Mitte des Verschiebeweges der Stange angeordnet und insbesondere an dem Ort, an dem ein Druckstück die Stange radial belastet. Vorzugsweise ist der Positionssensor in dem Druckstück integriert. Es kann auch zweckmäßig sein, den Positionssensor neben dem ersten Getriebeelement, wie etwa neben einem Ritzel, das mit einer als Zahnstange ausgebildeten Stange kämmt, anzuordnen. Ist die Stange als Zahnstange ausgebildet, so kann es zweckmäßig sein, die Zähne oder Gestaltsveränderungen an den Zähnen der Zahnstange als Referenzmarken oder Referenzinformationen zu benutzen. In der Nähe des ersten Anschlages der Zahnstange können zwei aufeinander folgende Zähne das erste Paar Referenzmarken oder die erste Referenzinformation bilden und an dem zweiten Anschlag zwei Zähne mit einem Zahn Abstand das zweite Paar Referenzmarken oder die zweite Referenzinformation bilden.

Zusätzlich zu dem beschriebenen Verfahren der Bestimmung der Position der Stange oder eines Lenkwinkels eines Rades des Fahrzeugs ist eine Hilfsschaltung in dem Lenksystem vorgesehen, die einen geringen Energieverbrauch aufweist und in der Lage ist, Änderungen in der Position der Stange oder des Lenkwinkels, die durch das Bewegen einer Lenkhandhabe des Fahrzeugs bei ausgeschalteter Zündung herrühren, durch vorzugsweise ein Auszählen von phasenversetzten Sinussignalen des Drehwinkelsensors zu erfassen. Der Betrag und die Richtung der Signale des Drehwinkelsensors werden bei ausgeschalteter Zündung des Fahrzeugs beispielsweise in dem Speicher des Lenksystems abgelegt. Nach Einschalten der Zündung werden die gespeicherten Werte mit aktuellen Signalen des Drehwinkelsensors verknüpft und die Position der Stange oder die Größe des tatsächlichen, sich bei ausgeschalteter Zündung eventuell verändert habenden Lenkwinkels hochgenau bestimmt.

Bei ausgeschalteter Zündung werden die Signale des Drehwinkelsensors für das erste Getriebeelement oder für eine Abtriebswelle des Servomotors des Lenksystems periodisch in einem Intervall von etwa 10 ms erfasst. Nach jeder Änderung des Signals des Drehwinkelsensors verbleibt die Hilfsschaltung und/oder die Zählereinrichtung in einem aktivierten Modus. Die Schrittweite der Signale des Drehwinkelsensors beträgt bevorzugt 45° Drehwinkel von dem ersten Getriebeelement oder der Abtriebswelle des Servomotors des Lenksystems. Der absolute Drehwinkel des ersten Getriebeelements oder der Abtriebswelle des Servomotors (absoluter Rotorwinkel) kann mit dem erfindungsgemäßen Lenksystem mit einer Genauigkeit von etwa 2° oder besser ermittelt werden.

Der durch die Steuer- und/oder Regelungseinrichtung ermittelte Lenkwinkel oder die Position der Stange kann stetig durch die Signale des Positionssensors für die Stange plausibilisiert werden. Eine Fehlfunktion der Hilfsschaltung und/oder der Zählereinrichtung ist damit sicher feststellbar. Auch kann mit der Hilfsschaltung und/oder der Zählereinrichtung die Funktion eines externen Lenkwinkelsensors überprüft werden.

Die beschriebene Weise der Erfassung der Verschiebeposition der Stange und damit der Bestimmung des absoluten Drehwinkels des ersten Getriebeelements oder der Lenkhandhabe oder der Welle des Servomotors, verbunden mit der gesteuerten, vorzugsweise elektronisch gesteuerten Hubbegrenzung der Stange eignet sich insbesondere für den Einsatz in einer elektrisch unterstützten Servolenkung oder einer steer-by-wire Lenkung, da hier der vorhandene Rotordrehzahlsensor des Servomotors als Drehwinkelsensor angewandt werden kann.

Die Erfindung wird nun näher anhand eines Ausführungsbeispieles beschrieben und anhand der beiliegenden Zeichnung wiedergegeben.
- Fig. 1: zeigt ein schematisches Blockschaltbild eines erfindungsgemäßen Lenksystems,
- Fig. 2: zeigt die Signalfolge der Sensoren des Lenksystems in Fig. 1,
- Fig. 3: zeigt eine weitere Signalfolge eines Lenksystems,
- Fig. 4.: zeigt eine Draufsicht auf eine Stange in einem weiteren Lenksystem und eine dazugehörende Signalfolge,
- Fig. 5: zeigt Querschnitte der Stange in Fig. 4.

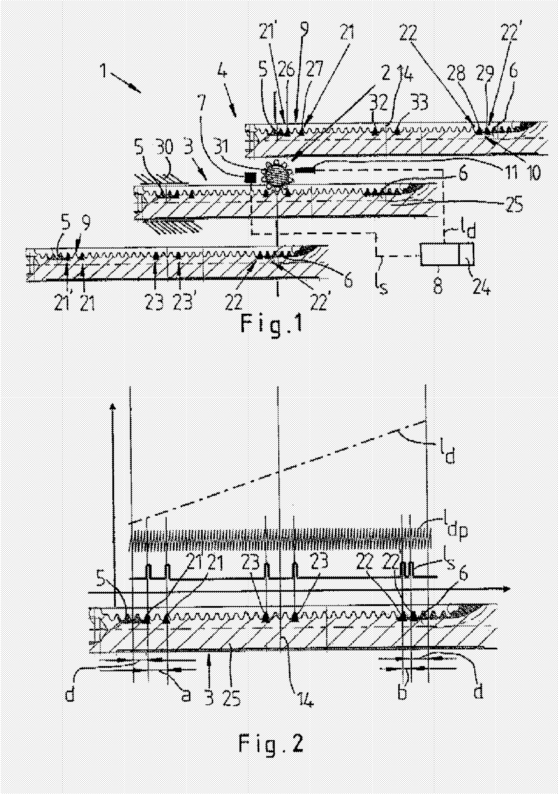

In Figur 1 ist in einem schematischen Blockschaltbild ein Lenksystem 1 für ein Kraftfahrzeug dargestellt. Das Lenksystem 1 ist als Zahnstangen-Servolenkung dargestellt, wobei ein Getriebe 4, zur Umformung einer Rotationsbewegung eines ersten Getriebeelements 2 in eine axiale Verschiebebewegung einer Stange 3 in einem Getriebegehäuse 30 dient. Die Stange 3 ist als Zahnstange 25 ausgebildet auf der das als Ritzel 31 ausgebildete, eingangsseitige, erste Getriebeelement 2 kämmt. Die Zahnstange 25 ist zwischen einem ersten axialen Anschlag 5 und einem zweiten gegenüberliegenden axialen Anschlag 6 verschiebbar. Die Zahnstange 25 ist mit nicht gezeigten Spurstangen und Radlenkhebeln von lenkbaren Rädern des Kraftfahrzeuges zu deren Lenkwinkelverstellung verbunden. Eine an einer Lenkhandhabe, wie etwa einem Lenkrad des Kraftfahrzeugs, eingebrachte Drehbewegung oder Verstellbewegung induziert über eine an sich bekannte elektronische Koppelung der Lenkhandhabe mit einem Servomotor eine Rotationsbewegung des Ritzels 31. Die Drehbewegung des Ritzels 31 oder der Servomotorwelle wird mit einem Drehwinkelsensor 11 in Richtung und Umdrehungszahl erfasst und ein Drehwinkelsignal I_{d} an eine Steuer- und/oder Regelungseinrichtung 8 des Lenksystems 1 geleitet. In Fig. 2 ist das integrierte Drehwinkelsignal I_{d} in linear sich in Abhängigkeit von der Zahnstangenposition verändernder Weise dargestellt. Das Drehwinkelsignal ist von einem rechten, ersten mechanischen Anschlag 5 zu einem linken, zweiten mechanischen Anschlag 6 steigend.

Ein Positionssensor 7 ist neben dem Ritzel 31 in dem Getriebegehäuse 30 über der Verzahnung der Zahnstange 25 angeordnet und detektiert ein erstes Paar Referenzmarken 21,21', ein zweites Paar Referenzmarken 22,22' und ein drittes, in der Mitte 14 der Zahnstange 25 angeordnetes Paar Referenzmarken 23,23'. Das erste und das zweite Paar Referenzmarken 21,21' und 22,22' und insbesondere deren zweiten, äußeren Referenzmarken 21' und 22' sind mit gleichem Abstand d von dem ersten und zweiten mechanischen Anschlag 5,6 und in Anschlagsnähe angeordnet.

Das erste und zweite Paar Referenzmarken 21,21' und 22,22' dient zur Erfassung der Absolutposition der Zahnstange 25 und zur Darstellung einer gesteuerten, insbesondere von der Steuer- und/oder Regelungseinrichtung 8 gesteuerten Hubbegrenzung der Zahnstange 25. Der Signalverlauf des Signals Iₛ des Positionssensors 7 ist in Fig. 2 dargestellt. Beide Signale, Iₛ und I_{d} ,werden der Steuer- und/oder Regelungseinrichtung 8 zugeführt und verknüpft um einen Abgleich des Drehwinkelsensor-Signals I_{d} zu ermöglichen und um eine über den Verschiebeweg der Zahnstange 25 kontinuierliche exakte Bestimmung der Position der Zahnstange 25 und der Lenkhandhabe zu erhalten.

Wird von dem Positionssensor 7 die jeweils innere, erste Referenzmarke 21,22 detektiert, wird die interne Drehwinkelinformation aus dem periodischen Signal I_{dp} des Drehwinkelsensors 11 (vgl. Fig. 2) in einem Speicher 24 gespeichert. Bei Erreichen der jeweils zweiten, äußeren Referenzmarke 21',22', die mit dem Abstand d zu den Anschlägen 5,6 der Zahnstange 25 angeordnet sind, wird mittels der internen Drehwinkelinformation und der Drehrichtung des Ritzels 31 von der Steuer- und/oder Regelungseinrichtung 8 bestimmt, an welcher Position sich die Zahnstange 25 momentan befindet. In Fig. 1 ist unten die Position der Zahnstange 25 an ihrem linken, zweiten mechanischen Anschlag 6 und oben die Position der Zahnstange 25 an ihrem rechten, ersten mechanischen Anschlag 5 gezeigt.

In dem gezeigten Ausführungsbeispiel sind alle Referenzmarken 21,21', 22,22', 23,23' durch die Zähne 26,27,28,29,32,33 der Zahnstange 25 und durch Gestaltsmerkmale an den Zähnen, wie Bohrungen, Senken oder Kerben gebildet. Das erste Paar Referenzmarken 21,21' wird durch zwei unmittelbar aufeinanderfolgende Zähne 26,27 mit dem Abstand a gebildet, während das zweite Paar Referenzmarken 22,22' durch zwei Zähne 28,29 mit einem Zahn Abstand (b) dazwischen gebildet ist. Das dritte Paar Referenzmarken 23,23' wird durch zwei Zähne 32,33 mit zwei Zähnen Abstand gebildet.

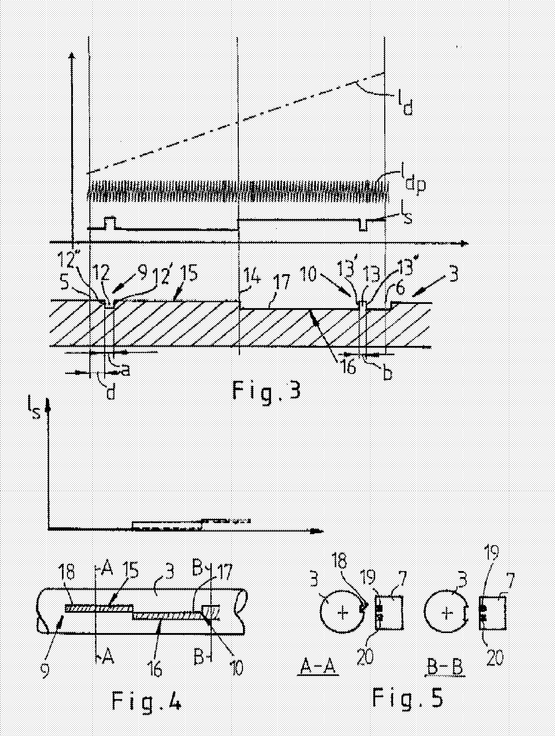

In Fig. 3 ist ein Längsschnitt durch eine Stange 3 eines weiteren Lenksystems und ein dazugehörige Signalfolge gezeigt. Die Stange 3 weist in der Nähe ihres ersten Anschlages 5 eine in Form einer Kerbe 12 eingeprägte Referenzinformation 9 auf. In der Nähe ihres zweiten Anschlages 6 weist die Stange 3 eine zweite Referenzinformation 10 in Form einer zweiten Kerbe 13 auf. Die der Mitte 14 der Stange 3 zugewandte Flanken 12',13' und die dem jeweiligen Anschlag 5, 6 zugewandten Flanken 12",13" sind mit gleichem Abstand a,b angeordnet. Die in dem Sonderfall gezeigte zweite Kerbe 13 ist invers dargestellt, sodaß auf diese Weise eine von der jeweiligen Position des Positionssensors 7 zu der Stange 3 unabhängige Möglichkeit gegeben ist, nach Inbetriebnahme und im Betrieb des Lenksystems 1 die Stangenposition stets und sofort erfassen zu können.

Der Positionssensor 7 erfaßt in dem gezeigten Beispiel links der Mitte 14 die Kerbe 12 als logisch "1" und rechts der Mitte 14 als logisch "0". Die die Kerben 12,13 definierende dritte Referenzinformation 15 und vierte Referenzinformation 16, die sich links und rechts der Mitte 14 zu den Kerben 12,13 erstrecken, erzeugen ein gleichförmiges, voneinander unterschiedliches Signal. In dem in Figur 3 gezeigten Ausführungsbeispiel bildet eine in die Stange 3 von der Mitte 14 bis zu der Flanke 13' der Kerbe 13 verlaufende Nut 17 konstanter Tiefe die vierte Referenzinformation 16.

Wie in Fig. 4 gezeigt ist, kann eine weitere Nut 18, tangential um eine Nutbreite versetzt und von der Mitte 14 nach links verlaufend, die dritte Referenzinformation 15 bilden. Die Nuten 17,18 in Fig. 4 werden von je einem Messelement 19,20 des Positionssensors 7 erfaßt, wobei sich eine in Fig. 4 oben gezeigte Signalfolge ergibt. Die Meßelemente können Hallsensoren sein. Fig. 5 zeigt in zwei Querschnitten A-A, B-B durch die Stange 3 in Fig. 4.

## Patentansprüche

1. Lenksystem für ein Fahrzeug, insbesondere Servolenkung für ein Kraftfahrzeug, mit einem, eine Rotationsbewegung eines ersten Getriebeelements (2) in eine axiale Verschiebebewegung einer Stange (3) zur Lenkwinkelverstellung eines Rades umformenden Getriebe (4), wobei die Verschiebebewegung der Stange (3) zwischen einem ersten Anschlag (5) und einem zweiten Anschlag (6) erfolgt, und mit einem Positionssensor (7) zur Erfassung der Position der Stange (3) und einer Steuer- und/oder Regelungseinrichtung (8), **dadurch gekennzeichnet, dass** der Stange (3) oder ein mit ihr verschiebbares Bauteil des Lenksystems (1) in der Nähe ihres ersten Anschlages (5) zumindest eine Referenzinformation (9) und in der Nähe ihres zweiten Anschlages (6) eine zweite Referenzinformation (10) zur Erfassung der Position der Stange (3) durch den Positionssensor (7) eingeprägt ist, wobei durch die Steuer- und/oder Regelungseinrichtung (8) die Signale (Iₛ) des Positionssensors (7) mit den Signalen (I_{d}) eines Drehwinkelsensors (11) für das erste Getriebeelement (2) oder für einen Servomotor des Lenksystems (1) verknüpft sind.

2. Lenksystem nach Anspruch 1, **dadurch gekennzeichnet, dass** die Referenzinformationen (9,10) aus Flanken (12', 12") einer ersten Kerbe (12) mit einem ersten Abstand (a) und aus Flanken (13',13") einer zweiten Kerbe (13) mit einem von dem ersten Abstand (a) verschiedenen, zweiten Abstand (b) gebildet sind.

3. Lenksystem nach Anspruch 1, **dadurch gekennzeichnet, dass** die Referenzinformationen (9,10) aus Flanken (12',12") einer ersten Kerbe (12) und aus Flanken (13',13") einer zweiten Kerbe (13) gebildet sind, deren Flankenabstand (a,b) gleich ist, wobei von der Mitte (14) zwischen den Kerben (12,13) sich jeweils eine dritte Referenzinformation (15) und eine vierte Referenzinformation (16), die als Flanken einer Kerbe oder als Eigenschaftsmerkmale der Stange (3) gebildet sind, die jeweils ein gleichförmiges, voneinander verschiedenes Signal des Positionssensors (7) erzeugen, sich zu der ersten und zweiten Kerbe (12,13) hin erstrecken.

4. Lenksystem nach Anspruch 3, **dadurch gekennzeichnet, dass** die dritte Referenzinformation (15) oder die vierte Referenzinformation (16) aus einer in axialer Richtung in die Stange (3) eingelassenen Nut (17) gebildet ist.

5. Lenksystem nach Anspruch 3, **dadurch gekennzeichnet, dass** die dritte und vierte Referenzinformation (15,16) jeweils eine axiale Nut (17,18) ist, wobei die Nuten (17,18) in tangentialer Richtung der Stange (3) versetzt zueinander angeordnet sind und jeder Nut (17,18) ein Messelement (19,20) des Positionssensors (7) zur Detektion der jeweiligen Nut (17,18) zugeordnet ist.

6. Lenksystem nach einem der Ansprüche 1 bis 5, **dadurch gekennzeichnet, dass** die erste Referenzinformation (9) und die zweite Referenzinformation (10) aus einem ersten Paar Referenzmarken (21,21') mit definiertem Abstand (a) der Referenzmarken (21,21') zueinander und aus einem zweiten Paar Referenzmarken (22,22') mit einem anderen Abstand (b) der Referenzmarken (22,22') als bei dem ersten Paar Referenzmarken (21,21') gebildet sind.

7. Lenksystem nach einem der Ansprüche 1 bis 6, **dadurch gekennzeichnet, dass** die erste Referenzinformation (9) und die zweite Referenzinformation (10) mit jeweils gleichem Abstand (d) von dem ersten und zweiten Anschlag (5,6) der Stange (3) entfernt angeordnet sind.

8. Lenksystem nach einem der Ansprüche 1 bis 7, **dadurch gekennzeichnet, dass** mittig zwischen dem ersten Anschlag (5) und dem zweiten Anschlag (6) an der Stange (3) oder dem mit ihr verschobenen Bauteil ein drittes Paar Referenzmarken (23,23') angeordnet ist.

9. Lenksystem nach einem der Ansprüche 1 bis 8, **dadurch gekennzeichnet, dass** bei Detektion jeweils einer ersten Flanke (12,13) oder Referenzmarke (21,22) an dem ersten oder zweiten Anschlag (5,6) von der Steuer- und/oder Regelungseinrichtung (8) das Signal des Drehwinkelsensors (11) gespeichert wird und bei der Detektion der jeweils zweiten Flanke (12',13') oder Referenzmarke (21',22') die Position der Stange (3) eindeutig bestimmt ist.

10. Lenksystem nach einem der Ansprüche 1 bis 9, **dadurch gekennzeichnet, dass** von dem Lenksystem (1) eine Hubbegrenzung der Stange (3) definiert ist nachdem der Positionssensor (7) jeweils die erste oder zweite Referenzinformation (9,10) oder das erste oder zweite Paar Referenzmarken (21,21'), (22,22') detektiert hat.

11. Lenksystem nach einem der Ansprüche 1 bis 10, **dadurch gekennzeichnet, dass** bei einer ersten Inbetriebnahme des Lenksystems (1) durch Verschieben der Stange (3) von dem ersten Anschlag (5) zu dem zweiten Anschlag (6) die absolute Position der Referenzmarken (21,21',22,22',23,23') oder der Referenzinformationen (9,10,15,16) auf der Stange (3) detektiert und in einem Speicher (24) des Lenksystems (1) abgespeichert wird.

12. Lenksystem nach einem der Ansprüche 1 bis 11, **dadurch gekennzeichnet, dass** die Stange (3) des Lenksystems (1) durch Rückstellkräfte eines oder mehrerer Komponenten des Lenksystems (1) im Stillstand in eine Position gebracht ist, in der der Positionssensor (7) zwischen dem ersten und zweiten Paar Referenzmarken (21,21'), (22,22') oder der ersten und zweiten Referenzinformation (9,10) positioniert ist.

13. Lenksystem nach einem der Ansprüche 1 bis 12, **dadurch gekennzeichnet, dass** die Stange (3) eine Zahnstange (25) oder eine Spurstange oder eine Kolbenstange ist.

14. Lenksystem nach einem der Ansprüche 1 bis 13, **dadurch gekennzeichnet, dass** die Referenzinformationen (9,10) durch Gestaltsmerkmale der Stange (3), wie Bohrungen oder Senken gebildet sind.

15. Lenksystem nach einem der Ansprüche 1 bis 14, **dadurch gekennzeichnet, dass** die Referenzinformationen (9,10) durch magnetische oder optische Kodierungen gebildet sind.

16. Lenksystem nach einem der Ansprüche 6 bis 15, **dadurch gekennzeichnet, dass** mehr als drei Paare Referenzmarken an der Stange (3) oder dem mit ihr verschiebbaren Bauteil des Lenksystems (1) angeordnet sind.

17. Lenksystem nach Anspruch 16, **dadurch gekennzeichnet, dass** die Referenzmarkenpaare mit definiertem Abstand an der Stange (3) oder dem mit ihr verschiebbaren Bauteil angeordnet sind, der einem Drehwinkel an einer Lenkhandhabe des Lenksystems (1) von jeweils etwa 90° entspricht.

18. Lenksystem nach einem der Ansprüche 1 bis 17, **dadurch gekennzeichnet, dass** der Positionssensor (7) auf einem Druckstück für die Stange (3) angeordnet ist.

19. Lenksystem nach einem der Ansprüche 1 bis 18, **dadurch gekennzeichnet, dass** der Positionssensor (7) neben dem ersten Getriebeelement (2) angeordnet ist.

20. Lenksystem nach einem der Ansprüche 6 bis 19, **dadurch gekennzeichnet, dass** die Stange (3) als Zahnstange (25) ausgebildet ist und an dem ersten Anschlag (5) zwei aufeinander folgende Zähne (26,27) der Zahnstange (25) das erste Paar Referenzmarken (21,21') bildet und an dem zweiten Anschlag (6) zwei Zähne (28,29) mit einem Zahn Abstand das zweite Paar Referenzmarken (22,22') bildet.

21. Lenksystem nach einem der Ansprüche 1 bis 20, **dadurch gekennzeichnet, dass** durch eine Hilfsschaltung des Lenksystems (1) oder der Steuer- und/oder Regelungseinrichtung (8) bei ausgeschalteter Zündung des Fahrzeugs die Signale (I_{d}) des Drehwinkelsensors (11) für das erste Getriebeelement (2) oder für den Servomotor des Lenksystems (1) in Betrag und Richtung erfasst sind.

22. Lenksystem nach Anspruch 21, **dadurch gekennzeichnet, dass** eine Zählereinrichtung die Signale (I_{d}) des Drehwinkelsensors (11) auswertet und deren Betrag und Richtung in dem Speicher (24) des Lenksystems (1) speichert.

23. Lenksystem nach einem der Ansprüche 21 oder 22, **dadurch gekennzeichnet, dass** bei eingeschalteter Zündung des Fahrzeugs die Summe von Betrag und Richtung der in dem Speicher (24) gespeicherten Signale (I_{d}) des Drehwinkelsensors (11) mit den aktuellen Signalen (I_{d}) des Drehwinkelsensors (11) verknüpft und die Position der Stange (3) und/oder ein Lenkwinkel des Rades des Fahrzeugs bestimmt wird.

24. Lenksystem nach einem der Ansprüche 21 bis 23, **dadurch gekennzeichnet, dass** die Hilfsschaltung des Lenksystems (1) oder die Zählereinrichtung die Signale (I_{d}) des Drehwinkelsensors (11) periodisch in einem Intervall von etwa 10 ms erfasst.

25. Lenksystem nach einem der Ansprüche 1 bis 24, **dadurch gekennzeichnet, dass** die Hilfsschaltung nach jeder Auswertung der Signale (I_{d}) des Drehwinkelsensors (11) für etwa 10 ms oder mehr in einem aktivierten Modus verbleibt.

26. Lenksystem nach einem der Ansprüche 1 bis 25, **dadurch gekennzeichnet, dass** die Schrittweite der Signale (I_{d}) des Drehwinkelsensors (11) 45 ° Drehwinkel von dem ersten Getriebeelement (2) oder einer Abtriebswelle des Servomotors des Lenksystems (1) beträgt.

27. Lenksystem nach einem der Ansprüche 1 bis 26, **dadurch gekennzeichnet, dass** durch die Steuer- und/oder Regelungseinrichtung (8) eine Toleranz des Drehwinkels des ersten Getriebeelements (2) oder der Abtriebswelle des Servomotors von höchstens 2° ermöglicht ist.

28. Lenksystem nach einem der Ansprüche 21 bis 27, **dadurch gekennzeichnet, dass** die durch die Hilfsschaltung des Lenksystems (1) oder durch die Zählereinrichtung des Lenksystems (1) ermittelte Position der Stange (3) oder der Lenkwinkel mit den durch die Referenzinformationen (9,10) auf der Stange (3) generierten Signalen (Iₛ) verglichen werden.

29. Lenksystem nach einem der Ansprüche 1 bis 28, **dadurch gekennzeichnet, dass** das Lenksystem (1) als Fremdkraftlenksystem oder elektrisch unterstütztes Lenksystem ausgebildet ist.
